# EUROPÄISCHE PATENTSCHRIFT

(11) **EP 4 204 288 B1**
(45) Veröffentlichungstag und Bekanntmachung des Hinweises auf die Patenterteilung: **09.10.2024**
(21) Anmeldenummer: 21743415.8
(22) Anmeldetag: 09.07.2021
(51) Int. Cl.: B62J 7/04, B62J 9/24

(54) **NEIGEFAHRZEUG MIT TRÄGERVORRICHTUNG**
TILTING VEHICLE WITH A CARRIER DEVICE
VÉHICULE INCLINABLE DOTÉ D'UN DISPOSITIF DE SUPPORT

(30) Priorität: 31.08.2020 DE 102020122627
(43) Veröffentlichungstag der Anmeldung: 05.07.2023
(73) Patentinhaber: Bayerische Motoren Werke Aktiengesellschaft, 80809 München (DE)
(72) Erfinder: SCHLAYER, Andreas, 81547 München (DE)
(86) Internationale Anmeldenummer: PCT/EP2021/069119
(87) Internationale Veröffentlichungsnummer: WO 2022/042921

(56) Entgegenhaltungen:
- EP-A1- 3 191 359
- WO-A1-2017/203544
- CN-Y- 2 574 968
- DE-A1- 102006 046 005
- DE-A1- 102014 223 048
- DE-U1- 29 906 623
- GB-A- 2 066 751
- GB-A- 2 264 274
- GB-A- 462 138
- JP-A- H04 331 680
- JP-A- H06 183 381
- JP-A- H09 118 282
- JP-U- S58 178 079
- JP-U- S58 190 283
- KR-B1- 100 942 247
- KR-B1- 101 246 939
- TW-U- M 338 194
- US-A- 3 901 534
- US-A- 3 963 158
- US-A- 4 588 114
- US-A1- 2016 375 947

## Beschreibung

Die Erfindung betrifft ein Neigefahrzeug mit Trägervorrichtung gemäß dem Oberbegriff des Patentanspruchs 1.

Neigefahrzeuge, wie Motorräder oder Motorroller, weisen meist einen sehr beschränkten Stauraum auf. Es werden daher häufig zusätzliche Gepäckbehältnisse am Fahrzeug montiert, wie beispielsweise Seitenkoffer, die an den Seiten im Bereich des Hinterrades angebracht werden.

Auch sind sogenannte "Topcases" bekannt, die im Heckbereich des Neigefahrzeugs auf einer Haltebrücke (auch als Gepäckbrücke bezeichnet) aufgesetzt werden. Da die Topcases im beladenen Zustand ein hohes Gewicht aufweisen können und dadurch hohe statische und dynamische Kräfte beziehungsweise Momente auf die Haltebrücken wirken, sind die Haltebrücken üblicherweise massiv ausgestaltet und aus Metall gefertigt. Häufig werden die Haltebrücken als Stahlrohrgestänge oder als Aluminium Druckguss-Bauteile ausgeführt.

Vorallem ein hinterer Befestigungspunkt der Haltebrücke wird im Betrieb des Fahrzeugs durch besonders hohe Momente belastet. Daher wird dieser Befestigungspunkt üblicherweise als sehr stabile, starre Befestigung der Haltebrücke am Heck des Neigefahrzeugs ausgeführt, wodurch jedoch aufgrund des damit verbundenen hohen Bauteilgewichts auch ein Gewicht des Gesamtfahrzeugs und die Lage eines Fahrzeugschwerpunkts negativ beeinflusst werden.

Die gattungsgemäße JP H09 118282 A offenbart ein Motorrad mit einem Gepäckträger, welcher hinter dem Fahrersitz angeordnet ist. Eine Befestigung des Heckträgers befindet sich unterhalb des Fahrersitzes.

Die WO 2017/203544 A1 betrifft einen Koffer für ein Motorrad sowie eine Halterung, worüber eine Position des Koffers relativ zum Fahrersitz verstellt werden kann.

Die DE 10 2014 223 048 A1 betrifft ein Gepäcksystem eines einspurigen Kraftfahrzeugs, insbesondere Motorrades oder Motorrollers, mit Maßnahmen zur Reduzierung von Pendelbewegungen während der Fahrt.

Die DE 299 06 623 U1 betrifft einen Kofferhalter für einen seitlich an einem Motorrad zu befestigenden Gepäckkoffer mit zur Befestigung an dem Motorrad vorgesehenen Halteteilen und mit zur Halterung des Gepäckkoffers vorgesehenen Haltemitteln.

Eine Aufgabe der Erfindung ist es eine Befestigung für ein Gepäckbehältnis an einem Neigefahrzeug weiterzuentwickeln, insbesondere dessen Gewicht möglichst zu reduzieren.

Diese Aufgabe wird gelöst durch ein Neigefahrzeug gemäß dem Gegenstand des Patentanspruchs 1. Vorteilhafte Ausführungsformen ergeben sich aus den hiervor abhängigen Patentansprüchen.

Demnach wird ein Neigefahrzeug bereitgestellt, mit einem Heckabschnitt und einer mit dem Heckabschnitt verbundenen Trägervorrichtung, wobei die Trägervorrichtung einen Aufnahmeabschnitt zum lösbaren Befestigen eines Gepäckbehälters umfasst und mit mindestens einem ersten Auflager im Bereich des Aufnahmeabschnitts mit dem Heckabschnitt sowie mit mindestens einem beabstandet zu dem mindestens einen ersten Auflager angeordneten zweiten Auflager mit dem Heckabschnitt verbunden ist. Außerdem ist das mindestens eine erste Auflager derart ausgebildet, dass dieses kein Drehmoment überträgt.

Als Neigefahrzeug werden im Rahmen dieser Beschreibung unter anderem Motorräder oder motorradähnliche Kraftfahrzeuge, wie Motorroller, insbesondere neigefähige zwei-, drei- oder vierrädrige Motorroller, Scooter oder Dergleichen, sowie Schneemobile oder Quads, verstanden.

Das Neigefahrzeug weist also im Heckbereich die Trägervorrichtung auf, die auch als Haltebrücke oder Gepäckbrücke bezeichnet wird und als Träger für den Gepäckbehälter vorgesehen ist. Dieser Gepäckbehälter kann im Bedarfsfall mit dem Aufnahmeabschnitt der Trägervorrichtung verbunden oder zu dessen Demontage wieder gelöst werden. Der Aufnahmeabschnitt kann beispielsweise eine Ebene bilden, auf die von oben das Gepäckbehältnis ausgesetzt wird, so dass der Aufnahmeabschnitt den Gepäckbehälter zum Beispiel von dessen Unterseite her stützt.

Die Trägervorrichtung ist über das mindestens eine erste Auflager und das mindestens eine zweite Auflager mit dem Heckabschnitt des Neigefahrzeugs verbunden und so am Fahrzeug befestigt. Als Heckabschnitt ist ein das Heck des Neigefahrzeugs bildender Abschnitt des Fahrzeugs zu verstehen, der als separates Bauteil ausgebildet sein kann, wie beispielsweise ein Heckrahmen, oder als (Teil-)Abschnitt einer Fahrzeugstruktur, wie beispielsweise eines Fahrzeugrahmens und/oder einer (tragenden oder nichttragenden) Fahrzeugkarosserie.

Es versteht sich, dass jeweils mehr als ein erstes oder zweites Auflager vorgesehen sein kann, jedoch wird der Einfachheit halber nachfolgend stets von einem ersten beziehungsweise einem zweiten Auflager gesprochen, die jeweils für ein oder mehrere entsprechende Auflager stehen können, sofern dies nicht explizit anders dargestellt ist.

Gemäß einer bevorzugten Ausführungsform ist die Trägervorrichtung mit zwei ersten Auflagern und zwei zweiten Auflagern mit dem Heckabschnitt verbunden. Vorzugsweise sind die zwei ersten Auflager spiegelsymmetrisch zu einer in Fahrzeuglängsrichtung ausgerichteten Fahrzeugmitte angeordnet. Gleiches gilt für die beiden zweiten Auflager, die ebenfalls spiegelsymmetrisch zu der Fahrzeugmitte angeordnet sein können.

In jedem Fall ist das mindestens eine erste Auflager derart ausgebildet, dass dieses kein Drehmoment überträgt. Dies bedeutet, dass das mindestens eine erste Auflager zumindest einen (oder mehrere) rotatorischen Freiheitsgrad(e) aufweist und so eine Drehbewegung beziehungsweise Kippbewegung der Trägervorrichtung zulässt, aber dennoch Kräfte zumindest in einer Höhenrichtung des Neigefahrzeugs aufnehmen kann. Vorzugsweise ist eine Drehachse der Drehbewegung (beispielsweise waagerecht) in Fahrzeugbreitenrichtung ausgerichtet.

Dies bietet die Möglichkeit, dass ein beispielsweise durch eine vertikale Bewegung des Gepäckbehälters bewirktes Moment zu der Drehbewegung der Trägervorrichtung im Bereich des mindestens einen ersten Auflagers führen kann. Dies kann insbesondere auftreten, wenn ein Schwerpunkt des Gepäckbehälters beabstandet zu dem einen oder den mehreren ersten Auflagern positioniert ist, insbesondere der Schwerpunkt in einer Fahrzeuglängsrichtung L hinter dem mindestens einen ersten Auflager angeordnet ist.

Beispielsweise kann die Drehbewegung der Trägervorrichtung im Bereich des ersten Auflagers zu einer entsprechenden elastischen Verformung der Trägervorrichtung entlang seiner Länge führen, wodurch das mindestens eine zweite Auflager zumindest mit einer Zugkraft beaufschlagt wird.

In jedem Fall wird durch die konstruktive Ausgestaltung eine Momentenbelastung des ersten Auflagers verhindert, so dass dieses entsprechend leicht ausgebildet sein kann. Anstelle der üblicherweise sehr steifen und starren Ausgestaltung des ersten Auflagers zur Kompensation dieses Moments, wird erfindungsgemäß das Moment mit Hilfe des zweiten Auflagers kompensiert, welches eine Gegenkraft bereitstellt, die über den Abstand zu dem ersten Auflager wirkt. Aufgrund dieser wirkenden Hebellänge kann auch für das mindestens eine zweite Auflager auf eine schwere, besonders (momenten-)steife Ausgestaltung verzichtet werden.

Dagegen kann die Trägervorrichtung eine ausreichende Biegesteifigkeit aufweisen. Aber auch diese lässt sich mit leichtgewichtigen Konstruktionen und leichten Werkstoffen realisieren, wie beispielsweise Leichtmetalle oder Kunststoffe, einschließlich faserverstärkte Kunststoffe. Dies bietet neben einem deutlichen Gewichtsvorteil gegenüber herkömmlichen, steifen und massiven Ausführungen der Trägervorrichtung den Vorteil, dass ein Gestaltungsspielraum hinsichtlich einer Dimensionierung und Formgebung deutlich erweitert wird.

Zum Beispiel kann das mindestens eine erste Auflager als Festlager, insbesondere als Kugelgelenk (auch als Kugellager bezeichnet) oder Zylindergelenk (einschließlich eines Rollgelenks) ausgebildet sein. Festlager stellen ein sogenanntes zweiwertiges Lager dar, das zwei Lagerreaktionen übertragen kann. Entsprechend ist eine Verschiebung des Lagers nicht möglich, jedoch wird kein Drehmoment aufgenommen und stattdessen eine Drehung zugelassen.

Alternativ oder zusätzlich hierzu kann das mindestens eine erste Auflager ein elastisches Verbindungselement zur Entkopplung einer Bewegung der Trägervorrichtung gegenüber dem Heckabschnitt umfassen. Dies bedeutet, dass das erste Auflager lediglich das elastische Verbindungselement umfasst, nicht jedoch das Festlager. In diesem Fall kann das elastische Verbindungselement beispielsweise ein Gummielement sein, welches ebenfalls kein Drehmoment aufnimmt und stattdessen eine Drehung zulässt. Je nach konstruktiver Ausgestaltung kann das Gummielement zusätzlich eine begrenzte (seitliche) Verschiebbarkeit im Rahmen seiner Elastizität ermöglichen.

Das elastische Verbindungselement kann aber auch gemeinsam mit einem Festlager kombiniert werden.

Gemäß einer Ausführungsform kann das mindestens eine zweite Auflager - wie voranstehend beschrieben - als starre Verbindung ausgebildet sein. Der Ausgleich einer Momentenbelastung erfolgt, wie beispielsweise durch eine Verformung der Trägervorrichtung, so dass das zweite Auflager auf Zug belastet wird. Die starre Ausgestaltung kann zudem eine ungewünschte Verschiebung der Trägervorrichtung verhindern. Alternativ kann das mindestens eine zweite Auflager als Festlager ausgebildet sein.

Zum Beispiel kann ein Abstand des zweiten Auflagers von dem ersten Auflager einen Wert zwischen 5 und 100
cm, vorzugsweise zwischen 5 und 40 cm aufweisen.

Außerdem kann der Gepäckbehälter ein Koffer, insbesondere ein Topcase, oder eine Tasche sein.

Die Erfindung wird nachfolgend anhand eines Ausführungsbeispiels im Vergleich zum Stand der Technik unter Bezugnahme auf die Figuren näher erläutert. Es zeigen:
- Fig. 1:: eine Seitenansicht eines Heckbereichs eines Neigefahrzeugs gemäß dem Stand der Technik, und
- Fig. 2:: eine Seitenansicht eines Heckbereichs eines Neigefahrzeugs gemäß der Beschreibung.

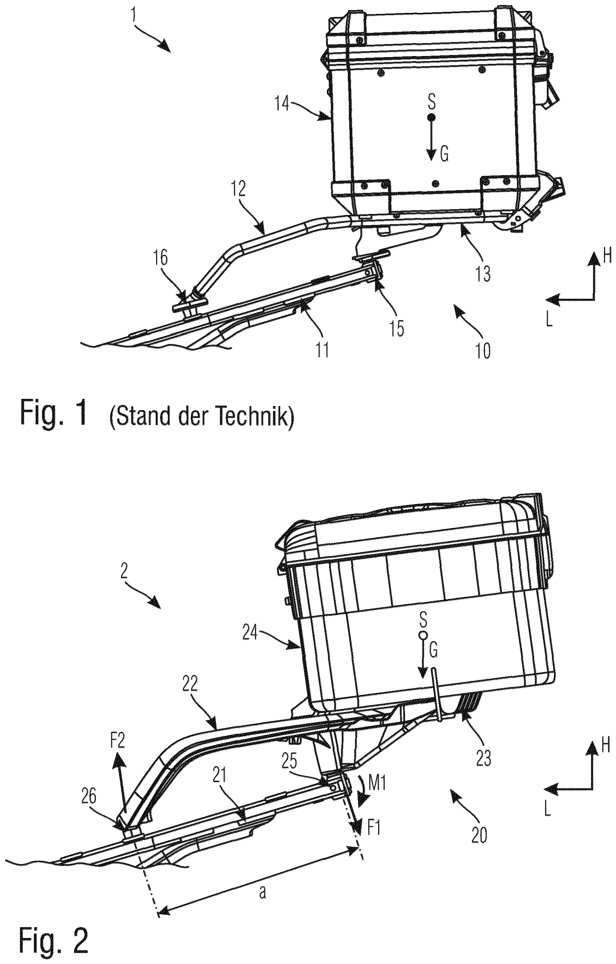

Fig. 1 zeigt eine Seitenansicht eines Heckbereichs 10 eines Neigefahrzeugs 1 (nicht näher dargestellt) gemäß dem Stand der Technik. Das Neigefahrzeug 1 weist einen Heckabschnitt 11 und eine mit dem Heckabschnitt 11 verbundene Trägervorrichtung 12 auf. Die Trägervorrichtung 12 umfasst einen Aufnahmeabschnitt 13 zum lösbaren Befestigen eines Gepäckbehälters 14 und ist mit zwei ersten Auflagern 15 im Bereich des Aufnahmeabschnitts 13 mit dem Heckabschnitt 11 sowie mit zwei beabstandet zu den ersten Auflagern 15 angeordneten zweiten Auflagern 16 mit dem Heckabschnitt 11 verbunden. Die beiden ersten Auflager 15 sind jeweils als starres Auflager 15 ausgebildet.

Der Gepäckbehälter 14 ist beispielhaft ein sogenanntes Topcase, wobei ein Schwerpunkt S des Gepäckbehälters 14 (in Fahrzeuglängsrichtung L) weit hinter den beiden ersten Auflagern 15 angeordnet ist. Dies hat zur Folge, dass durch eine Gewichtskraft G resultierende Belastungen und Momente durch die beiden starren ersten Auflager 15 aufgefangen werden müssen. Dies führt zu einer hohen Belastung der beiden ersten Auflager 15, so dass diese entsprechend massiv dimensioniert werden müssen, wodurch ein Fahrzeuggewicht negativ beeinflusst wird.

Aufgrund der exzentrisch wirkenden Gewichtskraft G des Gepäckbehälters 14 werden die beiden ersten Auflager 15 nicht nur jeweils mit einer Drucckraft beaufschlagt, sondern es muss an dieser Stelle das durch die Gewichtskraft G bewirkte Moment aufgefangen werden. Entsprechend wirkt im Falle einer Negativbeschleunigung jeweils eine Zugkraft auf die beiden ersten Auflager 15 und ein umgekehrt orientiertes Moment.

Dagegen werden die zweiten Auflager 16 im Idealfall nicht beaufschlagt. Da die Trägervorrichtung 12 jedoch nicht als ideal steif angenommen werden kann, wird diese durch die von ihr übertragenen Zugkräfte gelängt beziehungsweise durch Schubkräfte verkürzt. Aufgrund dieser Bewegung kann das Auflager 16 aber nur teilweise bei der Momentenaufnahme mitwirken, so dass ein Großteil des Moments im Auflager 15 aufgenommen wird.

Fig. 2 zeigt eine Seitenansicht eines Heckbereichs 20 eines nicht näher dargestellten Neigefahrzeugs 2, wie beispielsweise eines Motorrads oder eines motorradähnlichen Kraftfahrzeugs, gemäß der Beschreibung. Demnach weist das Neigefahrzeug 2 im Heckbereich 20 einen Heckabschnitt 21 und eine mit dem Heckabschnitt 21 verbundene Trägervorrichtung 22 (auch als Haltebrücke bezeichnet) auf, wobei die Trägervorrichtung 22 einen Aufnahmeabschnitt 23 zum lösbaren Befestigen eines Gepäckbehälters 24 umfasst und mit zwei ersten Auflagern 25 im Bereich des Aufnahmeabschnitts 23 mit dem Heckabschnitt 21 sowie mit zwei beabstandet zu den ersten Auflagern 25 angeordneten zweiten Auflagern 26 mit dem Heckabschnitt 20 verbunden ist. Außerdem sind die beiden ersten Auflager 25 derart ausgebildet, dass diese kein Drehmoment übertragen.

Das Gepäckbehältnis 24 ist von oben auf den Aufnahmeabschnitt 23 lösbar aufgesetzt, so dass der Gepäckbehälter 24 auf seiner Unterseite von dem Aufnahmeabschnitt 23 gestützt wird. Ein Schwerpunkt S des Gepäckbehälters 24 ist (in Fahrzeuglängsrichtung L) hinter den beiden ersten Auflagern 25 angeordnet.

Die Trägervorrichtung 22 ist über die beiden ersten Auflager 25 und die beiden zweiten Auflager 26 mit dem Heckabschnitt 21 des Neigefahrzeugs 2 verbunden. Es versteht sich, dass jeweils mehr oder auch weniger als die beiden ersten 25 oder die beiden zweiten Auflager 26 vorgesehen sein können.

Die beiden ersten Auflager 25 sind spiegelsymmetrisch zu der Fahrzeuglängsrichtung L ausgerichteten Fahrzeugmitte angeordnet, so dass in der dargestellten Seitenansicht lediglich das vorneliegende, linke erste Auflager 25 sichtbar ist, wobei das zweite erste Auflager dahinter verdeckt wird. Gleiches gilt für die beiden zweiten Auflager 26, die ebenfalls spiegelsymmetrisch zu der Fahrzeugmitte angeordnet sind, wobei in der Seitenansicht lediglich das linke zweite Auflager 26 erkennbar und das dahinter liegende rechte zweite Auflager verdeckt ist.

Die beiden ersten Auflager 25 sind derart ausgebildet, dass diese kein Drehmoment übertragen. Bei einer vertikalen Bewegung des Gepäckbehälters 24 wird also aufgrund der Anordnung seines Schwerpunktes S (in Fahrzeuglängsrichtung L) hinter den ersten Auflagern 25 ein Moment M1 im Bereich der beiden ersten Auflager 25 bewirkt, welches zu einer gleichgerichteten Drehbewegung beziehungsweise Kippbewegung der Trägervorrichtung 22 im Bereich des ersten Auflagers 25 führt, die durch den beschriebenen rotatorischen Freiheitsgrad der beiden ersten Auflager 25 ermöglicht wird.

Aufgrund der Fixierung der Trägervorrichtung 22 in den beiden zweiten Auflagern 26 führt das Moment M1 zu einer entsprechenden elastischen Verformung der Trägervorrichtung entlang seiner Länge und der Beaufschlagung der zweiten Auflager 26 mit der Zugkraft F2. Die zweiten Auflager 26 sind hierzu beispielsweise starr ausgebildet. Der große Vorteil dieser Ausführungsform besteht darin, dass eine hohe Momentenbelastung der beiden ersten Auflager 25 wirkungsvoll verhindert wird und diese entsprechend leicht ausgebildet sein können.

Es wird also anstelle der üblicherweise sehr steifen und starren Ausgestaltung der ersten Auflager 25 zur Kompensation der Momentenbelastung erfindungsgemäß das Moment M1 über die beiden zweiten Auflager 26 kompensiert, die im Abstand a zu den beiden ersten Auflagern 25 angeordnet sind. Aufgrund der wirkenden Hebellänge der Trägervorrichtung 22 über den Abstand a kann auch für diese beiden zweiten Auflager 26 auf eine schwere, besonders (momenten-)steife Ausgestaltung verzichtet werden.

Dagegen kann die Trägervorrichtung 22 eine ausreichende Biegesteifigkeit aufweisen, die ebenfalls durch eine leichtgewichtige Bauweise erzielbar ist.

Gemäß der in Fig. 2 dargestellten Ausführungsform sind die beiden ersten Auflager 25 jeweils als sogenanntes Festlager in Form eines Kugelgelenks (auch als Kugellager bezeichnet) ausgebildet. Entsprechend ist eine Verschiebung der beiden ersten Auflager 25 nicht möglich, jedoch wird kein Drehmoment aufgenommen und stattdessen die beschriebene Drehbewegung der Trägervorrichtung 22 zugelassen. Selbstverständlich kann das Festlager aber auch auf andere Art und Weise ausgebildet sein, beispielsweise als Zylindergelenk (einschließlich eines Rollgelenks). Alternativ oder zusätzlich hierzu können die beiden ersten Auflager 25 jeweils auch als elastische Verbindungselemente zur Entkopplung einer Bewegung der Trägervorrichtung 22 gegenüber dem Heckabschnitt 21 ausgeführt sein.

Zum Beispiel kann der Abstand a der zweiten Auflager 26 von den ersten Auflagern 25 einen Wert zwischen 5 und 100 cm, vorzugsweise zwischen 5 und 40 cm aufweisen.

Außerdem kann der Gepäckbehälter 24 ein Koffer, insbesondere ein Top-case, oder eine Tasche sein.

## Patentansprüche

1. Neigefahrzeug (2) mit einem Heckabschnitt (21) und einer mit dem Heckabschnitt (21) verbundenen Trägervorrichtung (22), wobei die Trägervorrichtung (22) einen Aufnahmeabschnitt (23) zum lösbaren Befestigen eines Gepäckbehälters (24) umfasst und mit mindestens einem ersten Auflager (25) im Bereich des Aufnahmeabschnitts (23) mit dem Heckabschnitt (21) sowie mit mindestens einem beabstandet zu dem mindestens einen ersten Auflager (25) angeordneten zweiten Auflager (26) mit dem Heckabschnitt (21) verbunden ist, **dadurch gekennzeichnet, dass** das mindestens eine erste Auflager (25) derart ausgebildet ist, dass dieses kein Drehmoment überträgt, und
dass das mindestens eine erste Auflager (25) ein elastisches Verbindungselement zur Entkopplung einer Bewegung der Trägervorrichtung (22) gegenüber dem Heckabschnitt (21) umfasst..

2. Neigefahrzeug (2) nach Anspruch 1, **dadurch gekennzeichnet, dass** das mindestens eine erste Auflager (25) als Festlager, insbesondere als Kugelgelenk oder Zylindergelenk, ausgebildet ist.

3. Neigefahrzeug (2) nach einem der Ansprüche 1 bis 2, **dadurch gekennzeichnet, dass** das mindestens eine zweite Auflager (26) als starre Verbindung ausgebildet ist.

4. Neigefahrzeug (2) nach einem der Ansprüche 1 bis 3, **dadurch gekennzeichnet, dass** ein Abstand (a) des mindestens einen zweiten Auflagers (26) von dem mindestens einen ersten Auflager (25) einen Wert zwischen 5 und 100 cm, vorzugsweise zwischen 5 und 40 cm, aufweist.

5. Neigefahrzeug (2) nach einem der Ansprüche 1 bis 4, **dadurch gekennzeichnet, dass** der Gepäckbehälter (24) ein Koffer, insbesondere ein Topcase, oder eine Tasche ist.

## Claims

1. Tilting vehicle (2) with a rear section (21) and with a carrier device (22) connected to the rear section (21), wherein the carrier device (22) comprises a receiving section (23) for the detachable fastening of a luggage container (24) and is connected to the rear section (21) by means of at least one first support (25) in the region of the receiving section (23) and is connected to the rear section (21) by means of at least one second support (26) arranged spaced apart from the at least one first support (25), **characterized in that** the at least one first support (25) is formed in such a way that it does not transmit any torque, and **in that** the at least one first support (25) comprises an elastic connection element for uncoupling a movement of the carrier device (22) with respect to the rear section (21) .

2. Tilting vehicle (2) according to Claim 1, **characterized in that** the at least one first support (25) is formed as a fixed bearing, in particular as a ball joint or cylinder joint.

3. Tilting vehicle (2) according to either of Claims 1 and 2, **characterized in that** the at least one second support (26) is formed as a rigid connection.

4. Tilting vehicle (2) according to any one of Claims 1 to 3, **characterized in that** a spacing (a) of the at least one second support (26) from the at least one first support (25) has a value of between 5 and 100 cm, preferably of between 5 and 40 cm.

5. Tilting vehicle (2) according to any one of Claims 1 to 4, **characterized in that** the luggage container (24) is a case, in particular a top case, or a bag.

## Revendications

1. Véhicule inclinable (2) avec une section arrière (21) et un dispositif de support (22) relié à la section arrière (21), le dispositif de support (22) comprenant une section de réception (23) pour la fixation amovible d'un conteneur à bagages (24) et étant relié à la section arrière (21) par au moins un premier appui (25) dans la zone de la section de réception (23) ainsi que par au moins un deuxième appui (26) agencé à distance de l'au moins un premier appui (25), **caractérisé en ce que** l'au moins un premier appui (25) est réalisé de telle sorte qu'il ne transmet pas de couple de rotation, et **en ce que** l'au moins un premier appui (25) comprend un élément de liaison élastique pour le découplage d'un mouvement du dispositif de support (22) par rapport à la section arrière (21).

2. Véhicule inclinable (2) selon la revendication 1, **caractérisé en ce que** l'au moins un premier appui (25) est réalisé sous forme de palier fixe, notamment sous forme d'articulation à rotule ou d'articulation cylindrique.

3. Véhicule inclinable (2) selon l'une quelconque des revendications 1 à 2, **caractérisé en ce que** l'au moins un deuxième appui (26) est réalisé sous forme de liaison rigide.

4. Véhicule inclinable (2) selon l'une quelconque des revendications 1 à 3, **caractérisé en ce qu'**une distance (a) de l'au moins un deuxième appui (26) par rapport à l'au moins un premier appui (25) présente une valeur comprise entre 5 et 100 cm, de préférence entre 5 et 40 cm.

5. Véhicule inclinable (2) selon l'une quelconque des revendications 1 à 4, **caractérisé en ce que** le conteneur à bagages (24) est une valise, notamment un top-case, ou un sac.
